# FASCICULE DE BREVET EUROPEEN

(11) **EP 4 256 454 B1**
(45) Date de publication et mention de la délivrance du brevet: **17.09.2025**
(21) Numéro de dépôt: 21824556.1
(22) Date de dépôt: 03.12.2021
(51) Int. Cl.: G06F 21/62

(54) **PROCÉDÉ DE TRANSMISSION DE DONNÉES, DISPOSITIF ET PROGRAMME CORRESPONDANT**
DATENÜBERTRAGUNGSVERFAHREN, VORRICHTUNG UND ENTSPRECHENDES PROGRAMM
DATA TRANSMISSION METHOD, DEVICE AND CORRESPONDING PROGRAM

(30) Priorité: 04.12.2020 FR 2012728
(43) Date de publication de la demande: 11.10.2023
(73) Titulaire: Banks and Acquirers International Holding, 75015 Paris (FR)
(72) Inventeur: MENARDAIS, Michaël, 33160 SAINT-MENARD-EN-JALLES (FR); TOURLONIAS, Loïc, 69100 VILLEURBANNE (FR); BOUYAUD, Mickael, 91370 VERRIERES-LE-BUISSON (FR); BERTHOLET, Rémi, 07500 GUILHERAND (FR)
(74) Mandataire: LLR
(86) Numéro de dépôt international: PCT/EP2021/084116
(87) Numéro de publication internationale: WO 2022/117789

(56) Documents cités:
- WO-A1-2013/088180
- US-A1- 2002 138 549

## Description

### 1. Domaine de l'invention

Le domaine de l'invention est celui des dispositifs électroniques comprenant un module ouvert et un module sécurisé. De tels dispositifs électroniques peuvent être modulaires ou intégrés. Plus précisément, l'invention concerne un procédé de transmission de données entre les modules constitutifs d'un dispositif électronique notamment un dispositif électronique de paiement.

### 2. Art antérieur et ses inconvénients

Les dispositifs de traitement de données modernes embarquent de plus en plus fréquemment un dispositif de traitement de données traditionnel (de type terminal de communication, smartphone, tablette) et un module sécurisé (de type terminal de de paiement ou terminal transactionnel). Ces deux dispositifs sont liés entre eux pour constituer un dispositif de traitement de données. En fonction de modes d'implémentation, soit le dispositif de traitement de données est constitué de deux dispositifs indépendants, fabriqué séparément et reliés entre eux de plusieurs manières différentes, soit le dispositif de traitement de données intègre directement les deux modules en son sein. Cette dernière configuration est de plus en plus fréquente : un seul dispositif est finalement fabriqué avec d'un côté un module de traitement, fonctionnant de manière ouverte et d'un autre côté un module de traitement de données sécurisé, fonctionnant de façon « fermée » et protégé contre les tentatives de fraudes, tant logicielles que matérielles (protection physique de l'accès aux signaux) et protection logicielle de l'accès aux données.

Qu'il soit intégré ou constitué de deux dispositifs (modules) fabriqués indépendamment, un tel dispositif de traitement de données possède la particularité de connecter entre eux deux modules dont les fonctions et les architectures sont très différentes les unes des autres. Par exemple, le module ouvert est caractérisé par son ouverture et sa modularité : l'objectif d'un tel module ouvert est de permettre aux utilisateurs de réaliser les actions qu'ils souhaitent (par exemple des commerçants, dans leurs boutiques, de réaliser l'enregistrement des produits ou services achetés par les clients) le module ouvert embarque donc de multiples applications.

Ainsi, un module ouvert « de vente » comprend par exemple des applications pour passer les commandes (i.e. scan des articles) et/ou pour constituer un panier d'achats et/ou pour effectuer des retours de marchandises et/ou pour établir des factures et/ou pour gérer des stocks, etc. Le module ouvert repose sur une architecture ouverte (par exemple Android^{®}, Windows^{®}, MacOS^{®}, etc.). Le caractère ouvert de ce dispositif (par exemple de vente) permet le développement de nombreux applicatifs métier. Cette ouverture est donc appréciée par les utilisateurs.

À l'opposé, le dispositif (ou module) de traitement de données sécurisé est conçu dans une architecture « fermée » qui permet d'assurer que les données qu'il traite, qui sont généralement des données sensibles, ne seront pas détournées, volées ou utilisées de manière frauduleuse. Le module sécurisé embarque donc des technologies de maintien de la sécurité et de la confidentialité permettant d'assurer une protection des données traitées : processeur sécurisé, mémoire sécurisée, dispositifs physiques de sécurisation (treillis, blindages, fausses touches, etc.). Il peut également comprendre une ou plusieurs interfaces de communication (USB, Bluetooth, NFC, réseau) physiques ou virtualisées (c'est-à-dire liées aux interfaces physiques du module ouvert).

Un problème général qui se pose donc dans un dispositif de traitement de données de ce type, est de faire en sorte que les deux modules (ouvert et sécurisé) puissent interagir entre eux, d'une part en maintenant l'attrait apporté par le module ouvert en termes d'accès et de potentiel de travail et d'autre part en continuant à assurer la sécurité des données traitées par le module sécurisé.

Ainsi, par exemple, lorsque les deux dispositifs sont connectés (connexion permanente ou temporaire) entre eux pour effectuer une transaction (par exemple une transaction de paiement), la sécurité de la transaction et des données utilisées doit être assurée. Il ne faut pas qu'une application malveillante, qui serait installée sur le dispositif ouvert, soit en mesure d'influer sur la transaction en cours en en modifiant et/ou en obtenant des données protégées. Or, à ce jour, les deux dispositifs (ou les deux modules) communiquent entre eux en utilisant des technologies, des mécanismes, des protocoles et des processus standardisés, calqués sur l'architecture OSI, allant de la couche applicative à la couche physique. Ainsi par exemple les protocoles très connus tels que TCP et IP sont actuellement utilisés pour faire communiquer les deux dispositifs (ou modules). L'implémentation de ces protocoles est souvent standard et est basée sur la mise en œuvre au sein de composants généraliste ou dédiés, de bibliothèques, qui peuvent se présenter sous la forme de bibliothèque en source ouvertes. Ainsi, à ce jour, lorsqu'une application du dispositif de vente souhaite effectuer une opération avec le dispositif de traitement de données, elle transmet donc une série de paquets TCP à destination d'une application de traitement de données du dispositif de traitement de données. Or, ces paquets peuvent être intentionnellement ou non, porteur de données ou de commandes frauduleuses. Ces données ou commandes frauduleuses peuvent avoir été forgées à l'insu de l'utilisateur à la suite d'une attaque menée directement sur la ou les bibliothèques en source ouverte utilisées pour tenter d'obtenir, de la part du dispositif de traitement de données, sécurisé, des données sécrètes ou personnelles (certificats, signatures, identifiants bancaires, etc.). Une solution pourrait être d'utiliser une bibliothèque standard et la faire certifier. Cependant une telle solution n'assure pas de pouvoir obtenir une telle certification et est très couteuse.

Le document US2002138549 décrit un accès Web sécurisé et contrôlé en utilisant un "smart proxy" à l'intérieur d'une carte à puce. Un terminal et la carte à puce coopèrent ensemble en s'appuyant sur les couches TCP 3 et 4 du terminal pour déterminer comment gérer la demande.

Il existe donc un besoin de fournir une technique de contrôle des données requises et fournies entre les deux dispositifs, particulièrement pour assurer la sécurité globale du dispositif tout en conservant le caractère ouvert de celui-ci.

### 3. Exposé de l'invention

L'invention répond à ce besoin en proposant un procédé de transmission de données entre un premier module électronique comprenant un processeur généraliste, dit module ouvert et un deuxième module électronique comprenant un processeur sécurisé, dit module sécurisé selon la revendication 1.

Ainsi, dans un tel dispositif, qu'il soit intégré ou non, il est possible de contrôler de manière efficace les données qui transitent entre le module ouvert et le module sécurisé, particulièrement lorsque les données sont destinées à une application sensible s'exécutant sur le module sécurisé. Plus généralement, l'invention se rapporte à un procédé de transmission de données, au sein d'un dispositif intégrant un module ouvert, exécutant un système d'exploitation ouvert, et un module sécurisé, exécutant un système d'exploitation qualifié de sécurisé (par opposition au système d'exploitation ouvert), le procédé comprenant, lors de l'exécution, par une application du module ouvert, d'une transaction impliquant l'utilisation de données sensibles (telles que des données de paiement, des données biométriques ou encore des clés de chiffrement, etc.), une phase de transmission de ces données par l'intermédiaire du composant spécialisé, agglomérant les couches 3 et 4 du système OSI, à un composant spécialisé de même type se trouvant au sein du module sécurisé, cette transmission mettant en œuvre tout ou partie de l'ensemble des étapes décrites dans la présente.

Selon une caractéristique particulière, l'étape de mise en œuvre dudit composant spécialisé de transmission de données du module ouvert comprend au moins une étape de contrôle d'autorisation de transmission de données de l'application vers l'application de destination. Ainsi, il est possible de rejeter immédiatement une tentative de transmission de donnée à partir d'une application qui ne serait pas autorisée à transmettre de telles données à un quelconque service s'exécutant sur le module sécurisé. Cette étape de contrôle d'autorisation peut avantageusement être mise en œuvre par le composant de transmission de données du module sécurisé.

Selon une caractéristique particulière, l'étape de mise en œuvre dudit composant spécialisé de transmission de données du module ouvert comprend au moins une étape de sérialisation de données, selon un format de sérialisation prédéterminé.

Ainsi, une application frauduleuse qui tenterait d'outrepasser le composant spécialisé de transmission de données ne serait pas à même de sérialiser facilement les données à transmettre. Selon un mode de réalisation particulier, l'étape de mise en œuvre dudit composant spécialisé de transmission de données du module ouvert comprend les étapes suivantes :
- Ouverture d'une connexion à destination d'un composant LibService de la pile hybridée du module sécurisé ;
- création, par un composant ITP de la pile hybridée, d'un buffer de réception des données à transmettre ;
- formatage, par le composant ITP de la pile hybridée, d'une requête d'ouverture de buffer à destination d'un composant ITP de la pile hybridée du module sécurisé, ladite requête d'ouverture comprenant au moins un identifiant du buffer de réception des données à transmettre et un chemin d'accès requis pour la transmission desdites données ;
- transmission de ladite requête d'ouverture de buffer ;
- réception, en provenance du composant ITP de la pile hybridée du module sécurisé d'un accusé de réception de ladite requête ; et
lorsque l'accusé de réception autorise la transmission de données :
- transmission desdites données vers ledit composant ITP de la pile hybridée du module sécurisé ; et
- fermeture de la connexion vers le composant LibService de la pile hybridée du module sécurisé.

Selon une caractéristique particulière, la requête d'ouverture de buffer comprend un identifiant de buffer et un identifiant de certificat.

Ainsi, la requête d'ouverture de buffer est sécurisée en ce qu'elle nécessite de faire apparaitre un certificat pour autoriser la transmission des données.

Selon une caractéristique particulière, le procédé comprend, au niveau du module sécurisé, une étape de vérification dudit identifiant de certificat, et lorsque la vérification dudit identifiant de certificat délivre un résultat négatif, une étape de fermeture de la connexion.

Ainsi, lorsqu'un certificat invalide est présenté, la transmission des données ne peut pas être effectuée.

Selon une caractéristique particulière, le procédé comprend, au niveau du module sécurisé, une étape de vérification dudit identifiant de certificat, et lorsque la vérification dudit identifiant de certificat délivre un résultat positif, une étape de transmission de l'accusé de réception de ladite requête d'ouverture de buffer.

Selon un mode de réalisation particulier, que postérieurement à la réception desdites données par ledit composant ITP de la pile hybridée du module sécurisé, il comprend une étape de soumission des données à un composant de filtrage ; et lorsque lesdites données ne correspondent pas à des données attendues pour application de destination, une étape de rejet desdites données transmise.

Ainsi, même si une application frauduleuse parvient à transmettre des données au module sécurisé, celles-ci sont vérifiées de manière à contrôler qu'elles sont conformes aux spécifications des données destinées à l'application de destination.

Selon un autre aspect, l'invention se rapporte également à un dispositif électronique associant en son sein un premier module électronique comprenant un processeur généraliste, dit module ouvert et un deuxième module électronique comprenant un processeur sécurisé, dit module sécurisé selon la revendication 9.

Selon un mode de réalisation de l'équipement électronique selon l'invention, le module ouvert est un module de communication et le module sécurisé est un terminal de paiement. L'invention concerne enfin un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé selon l'invention tel que décrit ci-dessus.

Un tel support d'enregistrement peut être n'importe quelle entité ou module capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé objet de l'invention précité.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- [fig. 1] représente le regroupement des couches réseaux mis en œuvre par la présente technique ;
- [fig. 2] représente un chemin parcouru par une requête en provenance d'une application du module ouvert vers un service du module sécurisé;
- [fig. 3] expose le protocole mis en œuvre dans le cadre d'une requête telle que celle présentée en figure 2 ;
- [fig. 4] expose le protocole mis en œuvre pour la transmission de paquet de type TCP/IP ;
- [fig. 5] représente une architecture physique simplifiée du dispositif de l'invention ;
- [fig. 6] est une autre représentation de l'architecture physique du dispositif de l'invention, insistant sur la liaison entre les deux processeurs des deux dispositifs formant le dispositif.

### 5. Description détaillée de modes de réalisation de l'invention

Le principe général de l'invention repose sur l'interception et le filtrage, par au moins un des modules ouvert ou sécurisé (également appelés dispositif ouvert ou dispositif sécurisé respectivement) du dispositif de traitement (modulaire ou non), des données physiquement échangées entre les deux modules par l'intermédiaire de la liaison physique (cablée) qui relie les deux processeurs de ces modules (le processeur du module ouvert est directement relié au processeur du module sécurisé), liaison physique de type SPI/UART (par la suite, seul SPI est mentionné pour plus de clarté et de concision).

L'invention s'inscrit dans la gestion de la sécurité des données échangées entre un module (dispositif) « ouvert » et un module (dispositif) « sécurisé » intégrés au sein du dispositif de traitement, qu'il s'agisse d'un dispositif de traitement modulaire (dans lequel les deux modules peuvent être physiquement connectés ou déconnectes, sans que cela affecte leur fonctionnement individuels lorsqu'il sont déconnectés) ou bien d'un dispositif complètement intégré ou les deux modules sont physiquement liés au sien du dispositif. Le module « ouvert » est qualifié de la sorte car il est géré par un utilisateur, qui peut, selon les spécifications de ce module, y installer des applications logicielles de son choix. Cette possibilité est offerte par l'éditeur du dispositif d'exploitation du module ouvert (comme par exemple Android^{™} ou iOS^{™}). Dans la mesure où il est admis que ces applications librement installables ne sont pas sécurisées (c'est-à-dire qu'elles peuvent comprendre toute ou partie des modules frauduleux) ou que l'utilisateur peut lui-même mettre en danger la sécurité du module ouvert en ayant des comportement non adaptés, le module ouvert est par nature considéré comme non sécurisé, et donc comme présentant potentiellement des risques pour le fonctionnement du module sécurisé avec lequel il est intégré au sein du dispositif de traitement (risque de vols de données ou de modification des comportements et/ou fonction du module sécurisé). Au contraire, le module sécurisé n'est pas gérable par l'utilisateur : le fabricant du module sécurisé n'autorise pas l'installation d'applications en provenance de magasins d'applications publics et n'autorise pas l'utilisateur à effectuer n'importe quelle action sur ce module. Par nature, le module sécurisé traite des données confidentielles ou privées (données bancaires, données biométriques, données personnelles) dont l'intégrité et la sécurité doivent être préservées. Cependant, dans l'objectif de pouvoir fournir de nouveaux services, des échanges de données « étendus » entre ces deux dispositifs sont autorisés, et gérés par l'intermédiaire de l'architecture spécifique présenté.

Ainsi, les deux modules (le module « ouvert » et le module « sécurisé ») échangent entre eux des données par l'intermédiaire d'une portion de pile réseau spécifique imitant le fonctionnement de la portion de pile réseau correspondante du modèle OSI (les sept couches de ces modèles sont intégrées au sein du module ouvert et du module sécurisé), avec cependant un protocole d'accord (« handshake ») particulier. Cette dernière caractéristique est importante car elle permet de supprimer la plupart de attaques subies par le module sécurisé de la part d'applications nuisibles ou frauduleuses s'exécutant sur le module ouvert. De telles applications peuvent tenter de transmettre de très grandes quantités des messages ou de données au module sécurisé dans l'objectif d'obtenir des données confidentielles. L'utilisation d'une pile réseau (« network stack ») dédiée à la communication entre les deux modules (deux dispositifs) intégrés au sein du dispositif électronique permet d'éviter ces vols de données confidentielles et/ou modification du module sécurisé.

Plus particulièrement, chaque module (le module ouvert et le module sécurisé) dispose d'une pile réseau standard (allant de la couche applicative 6 à la couche physique 1), la couche 7 étant la couche applicative. Cette pile réseau standard permet à chacun des deux dispositifs de conduire, indépendamment, les transmissions et réceptions de données avec l'extérieur (i.e. avec les serveurs auxquels ces deux dispositifs sont connectés pour transmettre et recevoir des données). Ainsi, par l'intermédiaire de la pile standard, le module ouvert peut transmettre et recevoir des données en provenance d'un serveur de traitement interne ou externe à l'organisation au sein de laquelle le module ouvert est affecté (par exemple le module ouvert peut communiquer, par l'intermédiaire de sa pile standard avec un serveur de gestion de commande ou un serveur de comptabilité d'un commerçant, mais également avec un serveur de téléchargement d'application d'un fournisseur de logiciel, situé en dehors du réseau de communication du commerçant). Ainsi, par l'intermédiaire de sa pile standard, le module sécurisé peut communiquer avec un ou plusieurs serveurs sécurisés, pour de manière classique, mener les opérations de transmission et de réception de données sécurisées avec ces serveurs sécurisés (par exemple le module sécurisé peut communiquer, par l'intermédiaire de sa pile standard avec un serveur bancaire, un serveur d'un prestataire de service de paiement, un serveur d'un acquéreur, mais également avec un serveur de mise à jour de logiciel du fabricant du module sécurisé). Ces deux piles standards sont mises en œuvre, sur le module sécurisé et sur le module ouvert par l'intermédiaire d'un ou de plusieurs composants tant matériels que logiciels dédiés pour chaque dispositif.

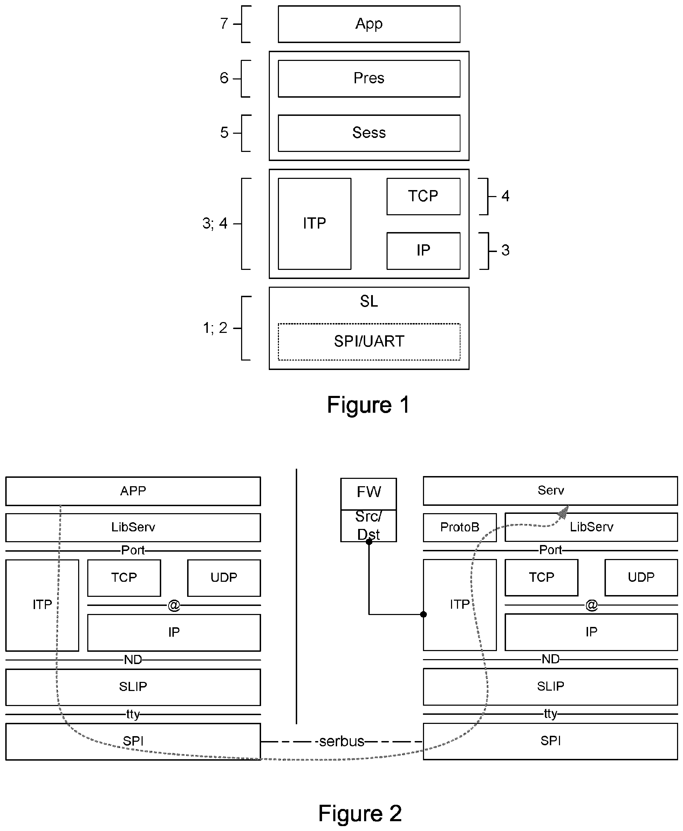

De plus, selon l'invention, lorsque le module ouvert et le module sécurisés doivent communiquer entre eux (c'est à dire lorsque des données doivent être échangées entre le module ouvert et le module sécurisé, par exemple des données de paiement ou toute autre information sensible, comme des données biométriques, des données personnelles, etc.), des composants spécifiques implémentant une pile réseau spécifique, sont utilisées. La pile réseau spécifique résultant de l'utilisation d'un ou de plusieurs composants logiciels ou matériels spécifiques, est qualifiée de pile sécurisée. Selon l'invention, dans un mode de réalisation particulier, deux composants de la pile réseau standard sont remplacés par un composant de la pile réseau spécifique. Les deux composants qui sont remplacés sont les composants de la couche 3 (réseau, IP) et de la couche 4 (transport, TCP/UDP). Dans la pile spécifique, ces deux composants sont remplacés par un composant appelé ITP, qui gère à la fois la fonctionnalité (couche) réseau et la fonctionnalité (couche) transport. Ainsi, le module ouvert et le module sécurisé disposent chacun d'un composant ITP (indifféremment nommé composant spécialisé ou composant ITP) qui est utilisé pour la transmission/réception d'information entre le module ouvert et le module sécurisé, dans certains cas spécifiques. Ainsi, dans ce mode de réalisation, la pile standard comprend des composants standards tandis que la pile spécifique comprend des composants standards et un composant spécialisé, utilisé pour remplacer les composants standard des couches 3 et 4. Les composants standards, qui ne sont pas remplacés, sont communs et partagés pour les deux piles. La figure 1 explicite l'architecture des composants telle que présentée précédemment. Les composants en communs aux deux piles sont : Présentation (Pres), Session (Sess), Lien Série (SL) avec un composant SPI/UART pour la communication directe entre les deux dispositifs. Le composant ITP est spécifique (spécialisé) à la communication entre les deux modules du dispositif : il n'est utilisé que pour la transmission de certains types de données spécifiques, par exemple des données de paiement qui doivent circulées entre le module ouvert et le module sécurisé et vice-versa, dans le cadre de l'exécution d'une transaction de paiement par exemple. Les composants TCP et IP sont utilisés de manière standard pour toute autre réception et/ou transmission de données. Comme indiqué sur la figure 1, on dispose donc d'une pile « sécurisée », qui est également hybride, et qui comprend un composant additionnel, sécurisé (ITP).

De plus, selon l'invention, la pile du module sécurisé est munie d'un composant additionnel de filtrage et de suppression. Ce composant est paramétrable et est intégré au sein et/ou en coupure du composant ITP.

De manière additionnelle, toujours selon l'invention, les composants standards et les composants ITP sont liés aux noyaux des dispositifs. Plus particulièrement, pour le dispositif ouvert, les composants (modifiés) de la pile standard et le composant ITP sont intégrés au noyau du dispositif d'exploitation (au sein d'une mémoire non modifiable, par exemple une Rom) et sont signés et vérifiés au démarrage du dispositif ouvert. Cela garanti l'absence de possibilité d'utilisation de ces composants lorsque la signature de ceux-ci est différente d'une signature préenregistrée. Il en est de même pour le module sécurisé. Ces caractéristiques sont additionnelles et évitent, particulièrement au niveau du dispositif ouvert, qu'une application malveillante tente de modifier la pile réseau standard ou le composant ITP.

En d'autres termes pour garantir l'intégration au sein d'un même dispositif du module ouvert et du module sécurisé, les inventeurs ont eu l'idée de modifier la prise en charge du requêtage (i.e. de la transmission et de la réception de données) au sein du module ouvert et du module sécurisé. Plus particulièrement, la nouvelle pile « sécurisée » est hybridée aux composants existants afin de permettre un traitement plus sécurisé et plus efficace des commandes en provenance de l'un ou de l'autre des dispositifs au sein du dispositif, cette nouvelle pile hybridée mettant en œuvre le composant ITP exclusivement dédié aux échanges entre ces deux dispositifs du dispositif. La pile hybridée reste également utilisable pour les interactions avec d'autres dispositifs externes au dispositif, sans toutefois utiliser le composant ITP.

Outre cette nouvelle pile de communication qui dans un exemple de réalisation effectue les opérations dévolues au composant TCP et au composant IP, la pile est munie d'un aiguilleur (session, couche 5) qui adapte son comportement (aiguillage vers ITP ou TCP/IP) en fonction des données formatées reçues de la part du gestionnaire de présentation (couche 6), qui effectue une structuration des données reçues de la part de la couche applicative (couche 7, application). Selon l'invention, le gestionnaire de présentation (Pres, couche 6) utilise un mécanisme de type « Protocol Buffer » pour formater les données reçues en provenance de la couche applicative, selon un format prédéterminé. Une fois le contrôle de formatage effectué, les données formatées et binarisées sont obtenues par l'aiguilleur de la couche session (couche 5), qui en fonction des données formatées et binarisées présentes dans le buffer, aiguille celles-ci vers le composant ITP ou vers le composant TCP.

On présente, en relation avec la figure 2, la logique de transmission de données entre le module (dispositif) ouvert et le module (dispositif) fermé, une application APP requérant l'obtention d'un service (SERV) de la part du module sécurisé.

Dans cet exemple, le module ouvert est muni d'un composant SPI, pilotant un bus de données série synchrone(serbus) et opérant en mode full-duplex. Dans cette implémentation, les circuits communiquent selon un schéma maître-esclave, où le maître contrôle la communication. Par exemple, le composant SPI du module ouvert contrôle la communication avec le composant SPI équivalent du module sécurisé. Le composant SPI reçoit ses données codées en provenance d'un composant SLIP et effectue un codage/décodage des données reçues du composant SPI avant de les transmettre au composant IP ou à la nouvelle pile de transmission. Le composant SLIP implémente des fonctionnalités de codage et de décodage pour les paquets SLIP, selon les dispositions de la RFC 1055. Il définit les fonctions de codage, de décodage et de validation, ainsi qu'une classe de pilote qui peut être utilisée pour implémenter une pile de protocoles SLIP et des classes de niveau supérieur qui s'appliquent le protocole SLIP aux connexions TCP/IP ou aux flux SPI. Le composant SLIP reçoit ses données (paquets) soit en provenance du composant IP de la pile réseau conventionnelle, soit du composant spécialisé ITP de la nouvelle pile sécurisée (sur le schéma, la réception est en provenance du composant ITP, ligne courbe en pointillés). Pour ce faire, le composant SLIP dispose d'un accès à deux groupes de buffers différents qui reçoivent chacun, en provenance du composant considéré (ITP ou IP), les paquets de données à transmettre. Selon la présente technique, le composant SLIP fonctionne en interrogeant à tour de rôle ces buffers de transmission pour en extraire les paquets à transmettre effectuer le codage de cas paquets et les transmettre au composant SPI pour transmission effective sur la liaison série entre les deux processeurs (UC). Le composant SLIP fonctionne également en réceptionnant les paquets en provenance du composant SPI, en effectuant leur décodage, en identifiant le buffer de réception et en déposant ce paquet dans le buffer de réception correspondant.

Ainsi, le procédé mis en œuvre est par exemple le suivant :
- Réception, par le composant de gestion de session (LibService) de la pile de communication hybridée du module ouvert, en provenance de l'application (APP) s'exécutant sur le module ouvert, d'une requête de transmission de donnée à l'application (Serv) de destination s'exécutant sur le module sécurisé ;
- Détermination, par le composant de gestion de session (LibService), d'une voie de transmission desdites données (composant traditionnel ou composant ITP) en fonction par exemple de la requête de l'application ; et
- Lorsque application (APP) souhaite transmettre lesdites données par l'intermédiaire du composant spécialisé de transmission de données (ITP), une étape de mise en œuvre du composant spécialisé de transmission de données (ITP) du module ouvert pour transmettre les données au composant spécialisé de transmission de données (ITP) correspondant du module sécurisé.

Cette mise en œuvre du composant spécialisé ITP comprend :
- Ouverture d'une connexion à destination d'un composant LibService de la pile hybridée du module sécurisé ;
- création, par le composant ITP de la pile hybridée, d'un buffer de réception des données à transmettre ;
- formatage, par le composant ITP de la pile hybridée, d'une requête d'ouverture de buffer à destination d'un composant ITP de la pile hybridée du module sécurisé, ladite requête d'ouverture comprenant au moins un identifiant du buffer de réception des données à transmettre et un chemin d'accès (pathname) requis pour la transmission desdites données ;
- transmission de ladite requête d'ouverture de buffer ;
- réception, en provenance du composant ITP de la pile hybridée du module sécurisé d'un accusé de réception de ladite requête ; et
lorsque l'accusé de réception autorise la transmission de données :
- transmission desdites données vers ledit composant ITP de la pile hybridée du module sécurisé ; et
- fermeture de la connexion vers le composant LibService de la pile hybridée du module sécurisé.

Dans ce qui suit et ce qui précède, bien entendu, il est convenu que les étapes de transmission décrites pour un composant d'un des deux modules correspondent à des étapes de réception pour l'autre module. Il est entendu également que les module qui transmettent des données sont en mesure de recevoir des données, comme c'est le cas pour les composants ITP des deux modules. l'invention se rapporte à un procédé de transmission de données, au sein d'un dispositif (par exemple un terminal de paiement de type terminal de paiement Android ou tout autre dispositif) intégrant un module ouvert, exécutant un système d'exploitation ouvert, et un module sécurisé, exécutant un système d'exploitation qualifié de sécurisé (par opposition au système d'exploitation ouvert), le procédé comprenant, lors de l'exécution, par une application du module ouvert, d'une transaction impliquant l'utilisation de données sensibles (telles que des données de paiement, des données biométriques ou encore des clés de chiffrement, etc.), une phase de transmission de ces données par l'intermédiaire du composant spécialisé, agglomérant les couches 3 et 4 du système OSI, à un composant spécialisé de même type se trouvant au sein du module sécurisé, cette transmission mettant en œuvre tout ou partie de l'ensemble des étapes décrites dans la présente.

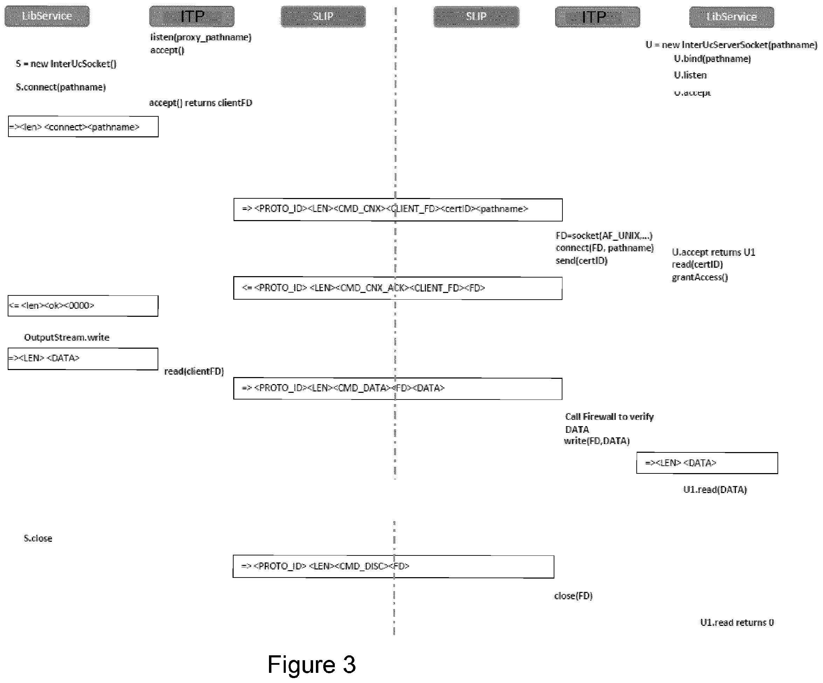

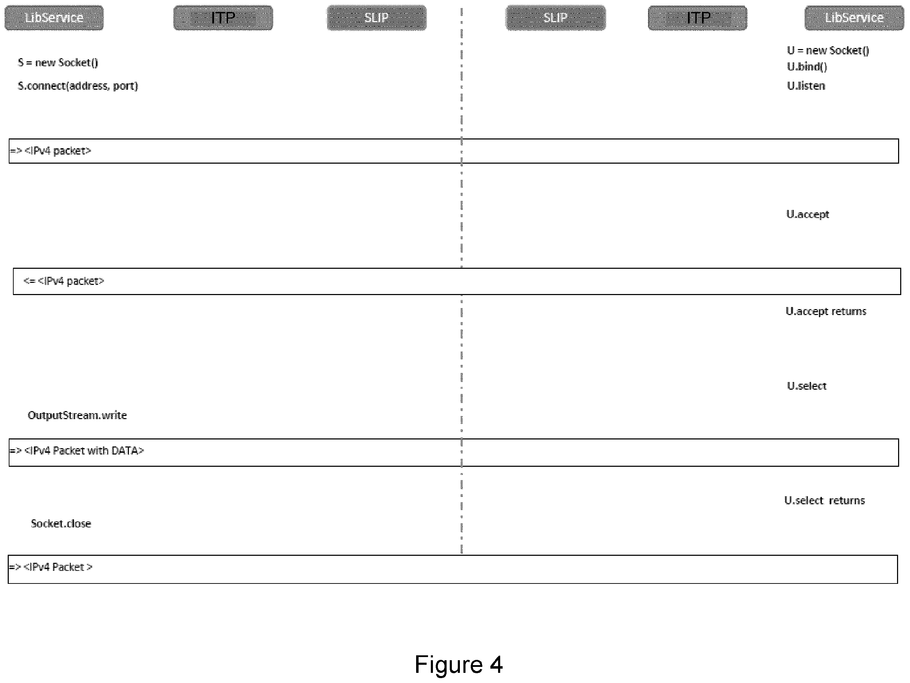

La figure 3 expose un ensemble d'étapes conduisant à la transmission de données dans un dispositif tel qu'exposé dans la présente par l'intermédiaire de composants spécialisés ITP. La figure 4 illustre la transmission de paquets TCP/IP en utilisant les mêmes composants ITP.

Le composant ITP reçoit ses données en provenance du composant LibService (LibServ) (socket Java/JNI) qui a lui-même reçu ces données en provenance de l'application appelante (App). Pour le composant LibService (LibServ), le principe consiste à formater les données pour qu'elles soient transmises, par l'intermédiaire du composant ITP du dispositif ouvert, au composant ITP correspondant du module sécurisé, selon un principe de chemin de données (DataPath). Le composant LibService (LibServ) construit également les données de session (endpoints). Le composant LibService (LibServ) reçoit, en provenance de l'application APP, une requête d'obtention de données et/ou de mise en œuvre de service pour le module sécurisé. Le composant LibService (LibServ) requiert auprès du composant ITP, la mise en œuvre d'une transmission effective de données. Le composant ITP accepte cette mise en œuvre en retournant un identifiant (clientFD). Cette acceptation est consécutive à une acceptation réciproque de la part du composant LibService (LibServ) du module sécurisé. Puis, le composant LibService (LibServ) du module ouvert construit, à partir des données fournies par l'application APP, une requête à destination du composant LibService (LibServ) du module sécurisé, requête comprenant l'identification des données formatées (proto_id), la longueur des données, la commande de connexion, l'identifiant (clientFD, identifiant de buffer), un identifiant de certificat (CertID) et un chemin (pathname). Le chemin (pathname), vise une application particulière sur le module sécurisé. Ces données sont ensuite transmises au module sécurisé par l'intermédiaire du principe précédemment décrit (composant ITP, composant SLIP, composant SPI - composant SPI, Composant SLIP, composant ITP).

Le composant ITP du module sécurisé réceptionne les données et effectue une vérification de celles-ci, notamment du chemin (pathname) et de l'application appelante (APP). Si ces données correspondent à des données autorisées (notamment pour ce qui est de l'application appelante et du chemin visé), il transmet un accusé de réception au composant ITP du module ouvert qui relai cette information au composant LibServ du dispositif ouvert. Puis, le composant LibService du module ouvert réceptionne les données en provenance de l'application appelante et les formate (protobuff) et les transmet (il les dépose sur le buffer correspondant) au composant ITP du dispositif ouvert. Le composant ITP du module ouvert produit une requête à partir des données déposées dans le buffer (clientFD) et transmet les données de cette requête au module sécurisé par l'intermédiaire du principe précédemment décrit (composant ITP, composant SLIP, composant SPI - composant SPI, Composant SLIP, composant ITP). A réception de ces données, le composant ITP du module sécurisé fait appel au composant de vérification et de filtrage (FW) pour déterminer si les données sont correctement formatées d'une part et s'il est possible de les accepter d'autre part. Si tel est le cas, les données sont écrites dans un buffer correspondant au buffer (ClientFD) du module sécurisé. Le composant LibServ du module sécurisé réceptionne ces données au sein du buffer (ClientFD) et les transmet au service visé (SERV) dans le chemin (pathname).

On note que selon l'invention, comme exposé en figure 4, il est également possible de transmettre également des paquets TCP/IP classiques en utilisant les composants libService des dispositifs ouvert et sécurisé respectivement. Pour ce faire le composant libService requiert la création d'une session « classique » (au sein TCP/IP traditionnel) en se connectant à une adresse IP et un port déterminé auprès du dispositif (ouvert ou sécurisé) auquel il est connecté.

Plus particulièrement en figure 3, le composant ITP est en écoute pour la prise en charge d'une transmission de données entre le dispositif émetteur et le dispositif récepteur. Pour ce faire, le composant ITP écoute un « canal » particulier, matérialisé par un chemin de proxy (« proxy_pathname »). Le composant libService du dispositif émetteur (le dispositif ouvert, dans le cas de la figure 3), définit un nouveau tunnel de transmission inter UC, en connectant celui-ci au canal précédemment ouvert. Du côté du dispositif récepteur, une mécanique similaire est mise en œuvre pour permettre l'écoute du canal monté entre les deux processeurs. Après acceptation par les deux dispositifs, le protocole de « proxy » (« proxy protocol ») est mis en œuvre, notamment en réalisant une sérialisation et un formatage (protocolBuffer) des données à transmettre. Les données du buffer du dispositif émetteur son transmises au buffer du dispositif récepteur, après une étape de vérification d'un certificat (CertID) attaché à une phase d'initialisation : lors de cette phase, le certificat Certld est vérifié et le buffer de réception des données est créé du côté récepteur. Un accusé de réception formaté est transmis par le composant ITP du récepteur au composant ITP de l'émetteur pour indiquer l'acceptation de la requête de transmission et confirmer la création du buffer de réception. Le composant libService est alors informé par le composant ITP.

A réception de cette confirmation, le composant libService transmet les données qui doivent être transmise au récepteur : il informe le composant ITP de la longueur (LNE) de ces données et fournit, à la suite, les données en question : pour ce faire in insère la longueur et les données de cette longueur dans le buffer précédemment créé par le composant ITP. Le composant ITP effectue une lecture de ce buffer et formatte et sérialise les données à destination du composant ITP du récepteur. A réception, le composant ITP fait appel à un composant de vérification (« Firewall »), qui vérifie d'une part le formatage des données reçues et d'autre leur provenance effective. Lorsque el firewall ne détecte pas de problématique relative à ces données, celles-ci sont écrites dans le buffer de destination et mise à disposition (formatage inverse) du composant LibService du récepteur qui effectue une lecture de ces données. Ces étapes de transmission peuvent être répétées autant de fois que nécessaire jusqu'à transmission complète des données. Lorsque l'intégralité des données a été transmise, le composant LibService de l'émetteur informe le composant ITP de la fin de transmission en fermant le canal de transmission. Le composant ITP de l'émetteur informe alors son homologue du récepteur pour qu'il libère le buffer de réception et ferme la connexion.

Plus particulièrement, en figure 4, le composant LibService de l'émetteur ouvre un canal de transmission et se connecte à une adresse IP et un port donné. Le composant LibService du récepteur, monte le tunnel permettant la transmission d'un premier paquet de notification de transmission. Le composant LibService du récepteur accepte le paquet reçu et en notifie le composant LibService du récepteur. Le composant LibService de l'émetteur effectue alors la transmission d'autant de paquets que nécessaire, jusqu'à fermeture du tunnel par ses soins. Les paquets sont transmis et reçus, dans ce cas de figure, sans que le composant de vérification et de filtrage (firewall) ne soit sollicité puisque ce type de transmission de données n'adresse pas, à priori de données protégées ou confidentielles.

Selon la présente technique, les couches réseaux et transport sont soit traitées par le composant TCP et le composant IP de la pile standard soit par l'intermédiaire du composant ITP lorsqu'il s'agit de données échangées entre le module ouvert et le module sécurisé.

Plus particulièrement, le composant ITP :
- expose les sockets Berkley comme les API entre les applications conservées sur des modules (dispositifs) sécurisés et ouverts ;
- gère l'unité de transmission maximale (MTU) ;
- s'assure que l'application conservée sur le module (dispositif) ouvert est autorisée à accéder aux services du module (dispositif) sécurisé :
   a. lors de la création du socket, sur le dispositif ouvert, l'ITP évalue l'autorisation de l'application appelante à requérir la création d'un tel socket ;
   b. lors de la liaison de socket au module sécurisé, A-ITP transfère l'autorisation à T-ITP qui reconnaît ou refuse la liaison ;
   c. T-ITP renvoie la décision à A-ITP qui la renvoie à l'application appelante ;
- Autorise deux modes de transfert :
   a. commande/réponse dans les deux sens ;
   b. tampon multimédia.

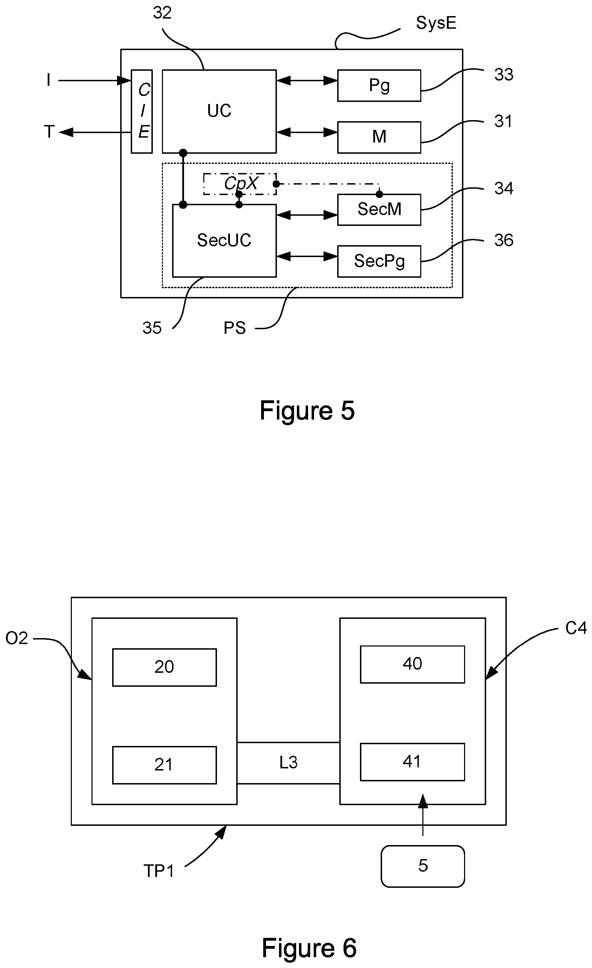

On présente, en relation avec la figure 5, une architecture simplifiée d'un dispositif électronique (SystE) apte à effectuer le traitement de transmission tel que présenté précédemment. Un dispositif électronique comprend un premier module électronique comprenant une mémoire 31, une unité de traitement 32 équipée par exemple d'un microprocesseur, et pilotée par un programme d'ordinateur 33. Le dispositif électronique comprend également un deuxième module électronique comprenant une mémoire sécurisée 34, qui peut être fusionnée avec la mémoire 31 (comme indiqué en pointillés, dans ce cas la mémoire 31 est une mémoire sécurisée), une unité de traitement sécurisée 35 équipée par exemple d'un microprocesseur sécurisée et de mesure physiques de protection (protection physique autour de la puce, par treillis, vias, etc. et protection sur les interfaces de transmission de données), et pilotée par un programme d'ordinateur 36 spécifiquement dédié à cette unité de traitement sécurisée 35, ce programme d'ordinateur 36 mettant en œuvre toute ou partie du procédé de traitement d'une transaction tel que précédemment décrit. Le groupe composé de l'unité de traitement sécurisée 35, de la mémoire sécurisée 34 et du programme d'ordinateur dédié 36 constitue le module sécurisé (PS) du dispositif électronique. Dans au moins un mode de réalisation, la présente technique est mise en œuvre sous la forme d'un ensemble de programmes installé en partie ou en totalité sur cette portion sécurisée du terminal de traitement de transaction. Dans au moins un autre mode de réalisation, la présente technique est mise en œuvre sous la forme d'un composant dédié (CpX) pouvant traiter des données des unités de traitement et installé en partie ou en totalité sur la portion sécurisée du dispositif de traitement. Par ailleurs, le dispositif comprend également des moyens de communication (CIE) se présentant par exemple sous la forme de composants réseaux (WiFi, 3G/4G/5G, filaire) qui permettent au dispositif de recevoir des données (I) en provenance d'entités connectées à un ou plusieurs réseaux de communication et des transmettre des données traitées (T) à de telles entités.

Un tel dispositif comprend, en fonction des modes de réalisation :
- des moyens d'obtention de données en provenance de dispositifs transactionnels présentés des utilisateurs (carte d'accès, carte de transaction, etc.; ces moyens peuvent se présenter, par exemple, sous la forme de lecteur de cartes à puces, ou encore de lecteurs de cartes sans contact de type NFC ou de type RFID) ;
- des moyens de saisie, permettant à l'utilisateur de saisir une ou plusieurs données pour la mise en œuvre de la transaction, lorsque cela est nécessaire (clavier de saisie physique, écran, clavier de saisie virtuel)
- des moyens de traitement des données obtenues par les moyens d'obtention de données en provenance des dispositifs transactionnels et des moyens de traitement des données saisies par l'utilisateurs ; ces moyens sont matérialisés par exemple sous la forme d'un composant spécialisé ;
- des moyens de traitement d'une transaction ;
- des moyens de fourniture de données à un ou plusieurs serveurs transactionnels connectés au dispositif ;

Comme explicité précédemment, ces moyens sont mis en œuvre par l'intermédiaire de modules et/ou de composants, par exemple sécurisés. Ils permettent ainsi d'assurer la sécurité des transactions réalisées tout en garantissant une plus grande maintenabilité du dispositif.

La figure 6 est une autre représentation d'un dispositif de traitement dans lequel la présente invention est mise en œuvre dans un mode de réalisation particulier.

Un tel dispositif de traitement modulaire comprend un premier module O2, tel qu'un module ouvert (i.e. comprenant un dispositif d'exploitation ouvert), connecté au moyen d'une connexion physique L3 (de type SPI/UART) à un deuxième module C4, module fermé, dit module de paiement. Le module de paiement C4 est capable d'exécuter des opérations relatives à des transactions sécurisées telles que des transactions de paiement.

Le premier module O2 comprend notamment une interface utilisateur 21 et un processeur 20. L'interface utilisateur 21 peut être, dans un mode de réalisation de l'invention, constituée d'un clavier alphanumérique et d'un écran. Dans un autre mode de réalisation de l'invention, l'interface utilisateur 21 peut être un écran tactile. Le module O2 embarque un premier dispositif d'exploitation OS1, comme par exemple le dispositif d'exploitation Android^{™}.

La connexion physique L3 est une connexion filaire qui permet de relier physiquement les deux modules O2 et C4.

Le module de paiement C4 comprend un processeur 40 ainsi qu'un lecteur de carte de paiement 41. Dans une première implémentation, le lecteur de carte de paiement 41 est un lecteur de carte (magnétique et/ou IC avec contact et/ou IC sans contact) sécurisé utilisant une connexion idoine afin d'échanger des données avec une carte de paiement 5. Le module de paiement C4 embarque un deuxième dispositif d'exploitation OS2 spécifique et sécurisé capable d'exécuter les opérations relatives à des transactions sécurisées telles que des transactions de paiement.

## Revendications

1. Procédé de transmission de données entre un premier module électronique comprenant un processeur généraliste, dit module ouvert et un deuxième module électronique comprenant un processeur sécurisé, dit module sécurisé, les deux modules étant associés dans un dispositif électronique, le premier module exécutant un premier système d'exploitation et le deuxième module exécutant un deuxième système d'exploitation, le module ouvert comprend une pile de communication hybridée comprenant, aux côtés des composants standards des couches 3 et 4 du modèle OSI, un composant spécialisé de transmission de données (ITP) gérant à la fois la couche réseau et la fonctionnalité couche transport et liant les couches 3 et 4 du modèle OSI, et le module sécurisé comprend également une pile de communication hybridée comprenant, aux côtés de composants standards des couches 3 et 4 du modèle OSI, un composant spécialisé de transmission de données (ITP) gérant à la fois la couche réseau et la fonctionnalité couche transport et liant les couches 3 et 4 du modèle OSI, le procédé comprenant les étapes suivantes :
- Réception, par un composant de gestion de session (LibService) de la pile de communication hybridée du module ouvert, en provenance d'une application (APP) s'exécutant sur le module ouvert, d'une requête de transmission de données à une application (Serv) de destination s'exécutant sur le module sécurisé ;
- Détermination, par le composant de gestion de session (LibService) de la pile de communication hybridée du module ouvert, d'une voie de transmission desdites données qui est requise par l'application (APP), en fonction du contenu de ladite requête, soit par l'intermédiaire du composant spécialisé de transmission de données (ITP) de la pile de communication hybridée du module ouvert, sans passer par les composants standards, des couches 3 et 4 du modèle OSI, de la pile de communication hybridée du module ouvert, soit par l'intermédiaire des composants standards, des couches 3 et 4 du modèle OSI, de la pile de communication hybridée du module ouvert, sans passer par le composant spécialisé de transmission de données (ITP) de la pile de communication hybridée du module ouvert ; et
- Lorsque l'application (APP) requiert la transmission desdites données par l'intermédiaire du composant spécialisé de transmission de données (ITP) de la pile de communication hybridée du module ouvert, une étape de mise en œuvre dudit composant spécialisé de transmission de données (ITP) du module ouvert pour transmettre les données au composant spécialisé de transmission de données (ITP) correspondant du module sécurisé.

2. Procédé de transmission de données selon la revendication 1, **caractérisé en ce que** l'étape de mise en œuvre dudit composant spécialisé de transmission de données (ITP) du module ouvert comprend, préalablement à cette mise en œuvre, au moins une étape de contrôle d'autorisation de transmission de données de l'application d'origine (APP) vers l'application (Serv) de destination.

3. Procédé de transmission de données selon la revendication 1, **caractérisé en ce que** l'étape de mise en œuvre dudit composant spécialisé de transmission de données (ITP) du module ouvert comprend au moins une étape de sérialisation de données, selon un format de sérialisation prédéterminé.

4. Procédé de transmission de données selon l'une des revendication 1 à 3, **caractérisé en ce que** l'étape de mise en œuvre dudit composant spécialisé de transmission de données (ITP) du module ouvert comprend les étapes suivantes :
- Ouverture d'une connexion à destination d'un composant de gestion de session (LibService) de la pile hybridée du module sécurisé ;
- création, par le composant spécialisé de transmission de données (ITP) de la pile hybridée du module ouvert, d'un buffer de réception des données à transmettre ;
- formatage, par le composant spécialisé de transmission de données (ITP) de la pile hybridée du module ouvert, d'une requête d'ouverture de buffer à destination d'un composant spécialisé de transmission de données (ITP) de la pile hybridée du module sécurisé, ladite requête d'ouverture comprenant au moins un identifiant du buffer de réception des données à transmettre et un chemin d'accès (pathname) requis pour la transmission desdites données ;
- transmission de ladite requête d'ouverture de buffer ;
- réception, en provenance du composant spécialisé de transmission de données (ITP) de la pile hybridée du module sécurisé d'un accusé de réception de ladite requête ; et
lorsque l'accusé de réception autorise la transmission de données :
- transmission desdites données vers ledit composant spécialisé de transmission de données (ITP) de la pile hybridée du module sécurisé ; et
- fermeture de la connexion vers le composant de gestion de session (LibService) de la pile hybridée du module sécurisé.

5. Procédé de transmission selon la revendication 4, **caractérisé en ce que** la requête d'ouverture de buffer comprend un identifiant de buffer (FD) et un identifiant de certificat (CertID).

6. Procédé de transmission selon la revendication 5, **caractérisé en ce qu'**il comprend, au niveau du module sécurisé, une étape de vérification dudit identifiant de certificat, et lorsque la vérification dudit identifiant de certificat délivre un résultat négatif, une étape de fermeture de la connexion.

7. Procédé de transmission selon la revendication 5, **caractérisé en ce qu'**il comprend, au niveau du module sécurisé, une étape de vérification dudit identifiant de certificat, et lorsque la vérification dudit identifiant de certificat délivre un résultat positif, une étape de transmission de l'accusé de réception de ladite requête d'ouverture de buffer.

8. Procédé de transmission selon la revendication 4, **caractérisé en ce que** postérieurement à la réception desdites données par ledit composant spécialisé de transmission de données (ITP) de la pile hybridée du module sécurisé, il comprend une étape de soumission des données à un composant de filtrage (firewal) ; et lorsque lesdites données ne correspondent pas à des données attendues pour application (Serv) de destination, une étape de rejet desdites données transmise.

9. Dispositif électronique associant en son sein un premier module électronique comprenant un processeur généraliste, dit module ouvert et un deuxième module électronique comprenant un processeur sécurisé, dit module sécurisé, le premier module exécutant un premier système d'exploitation et le deuxième module exécutant un deuxième système d'exploitation, le module ouvert comprend une pile de communication hybridée comprenant, aux côtés de composants standards des couches 3 et 4 du modèle OSI, un composant spécialisé de transmission de données (ITP) gérant à la fois la couche réseau et la fonctionnalité couche transport et liant les couches 3 et 4 du modèle OSI, et le module sécurisé comprend également une pile de communication hybridée comprenant, aux côtés de composants standards des couches 3 et 4 du modèle OSI, un composant spécialisé de transmission de données (ITP) gérant à la fois la couche réseau et la fonctionnalité couche transport et liant les couches 3 et 4 du modèle OSI, dispositif comprenant en outre :
- des moyens de réception, par un composant de gestion de session (LibService) de la pile de communication hybridée du module ouvert, en provenance d'une application (APP) s'exécutant sur le module ouvert, d'une requête de transmission de données à une application (Serv) de destination s'exécutant sur le module sécurisé ;
- des moyens de détermination, par le composant de gestion de session (LibService) de la pile de communication hybridée du module ouvert, d'une voie de transmission desdites données qui est requise par l'application, en fonction du contenu de ladite requête, soit par l'intermédiaire du composant spécialisé de transmission de données (ITP) de la pile de communication hybridée du module ouvert, sans passer par les composants standards, des couches 3 et 4 du modèle OSI, de la pile de communication hybridée du module ouvert, soit par l'intermédiaire des composants standards, des couches 3 et 4 du modèle OSI, de la pile de communication hybridée du module ouvert, sans passer par le composant spécialisé de transmission de données (ITP) de la pile de communication hybridée du module ouvert ; et
- des moyens de mise en œuvre dudit composant spécialisé de transmission de données (ITP) du module ouvert pour transmettre les données au composant spécialisé de transmission de données (ITP) correspondant du module sécurisé exécutés lorsque l'application (APP) souhaite transmettre lesdites données par l'intermédiaire du composant spécialisé de transmission de données (ITP).

10. Produit programme d'ordinateur comprenant des instructions de code de programme pour la mise en œuvre d'un procédé de communication selon la revendication 1, lorsqu'il est exécuté par un processeur.

## Patentansprüche

1. Verfahren zur Datenübertragung zwischen einem ersten elektronischen Modul, das einen Universalprozessor umfasst, so genanntes offenes Modul, und einem zweiten elektronischen Modul, das einen gesicherten Prozessor umfasst, so genanntes gesichertes Modul, wobei die zwei Module in einer elektronischen Vorrichtung zusammengefasst sind, wobei das erste Modul ein erstes Betriebssystem ausführt und wobei das zweite Modul ein zweites Betriebssystem ausführt, das offene Modul einen hybriden Kommunikationsstack umfasst, der, neben den Standardkomponenten der Schichten 3 und 4 des OSI-Modells, eine spezifische Datenübertragungskomponente (ITP) umfasst, die sowohl die Netzschicht als auch die Transportschichtfunktionalität verwaltet und die Schichten 3 und 4 des OSI-Modells verbindet, und das gesicherte Modul auch einen hybriden Kommunikationsstack umfasst, der, neben Standardkomponenten der Schichten 3 und 4 des OSI-Modells, eine spezifische Datenübertragungskomponente (ITP) umfasst, die sowohl die Netzschicht als auch die Transportschichtfunktionalität verwaltet und die Schichten 3 und 4 des OSI-Modells verbindet, wobei das Verfahren die folgenden Schritte umfasst:
- Empfangen, durch eine Sitzungsverwaltungskomponente (LibService) des hybriden Kommunikationsstack des offenen Moduls, von einer auf dem offenen Modul ausgeführten Applikation (APP), einer Aufforderung zur Übertragung von Daten an eine Zielapplikation (Serv), die auf dem gesicherten Modul ausgeführt wird;
- Bestimmen, durch die Sitzungsverwaltungskomponente (LibService) des hybriden Kommunikationsstack des offenen Moduls, eines von der Applikation (APP) benötigten Weges zur Übertragung der Daten, in Abhängigkeit von dem Inhalt der Aufforderung, entweder über die spezifische Datenübertragungskomponente (ITP) des hybriden Kommunikationsstack des offenen Moduls, ohne die Standardkomponenten, Schichten 3 und 4 des OSI-Modell, des hybriden Kommunikationsstack des offenen Moduls zu durchlaufen, oder über die Standardkomponenten, Schichten 3 und 4 des OSI-Modell, des hybriden Kommunikationsstack des offenen Moduls, ohne die spezifische Datenübertragungskomponente (ITP) des hybriden Kommunikationsstack des offenen Moduls zu durchlaufen; und,
- wenn die Applikation (APP) die Übertragung der Daten über die spezifische Datenübertragungskomponente (ITP) des hybriden Kommunikationsstack des offenen Moduls benötigt, einen Schritt des Verwendens der spezifischen Datenübertragungskomponente (ITP) des offenen Moduls, um die Daten an die entsprechende spezifische Datenübertragungskomponente (ITP) des gesicherten Moduls zu übertragen.

2. Datenübertragungsverfahren nach Anspruch 1, **dadurch gekennzeichnet, dass** der Schritt des Verwendens der spezifischen Datenübertragungskomponente (ITP) des offenen Moduls, vor diesem Verwenden, wenigstens einen Schritt der Kontrolle der Freigabe der Datenübertragung von der Ursprungsapplikation (APP) zu der Zielapplikation (Serv) umfasst.

3. Datenübertragungsverfahren nach Anspruch 1, **dadurch gekennzeichnet, dass** der Schritt des Verwendens der spezifischen Datenübertragungskomponente (ITP) des offenen Moduls wenigstens einen Schritt des Serialisierens von Daten, gemäß einem vorher festgelegten Serialisierungsformat, umfasst.

4. Datenübertragungsverfahren nach einem der Ansprüche 1 bis 3, **dadurch gekennzeichnet, dass** der Schritt des Verwendens der spezifischen Datenübertragungskomponente (ITP) des offenen Moduls die folgenden Schritte umfasst:
- Öffnen einer Verbindung zu einer Sitzungsverwaltungskomponente (LibService) des hybriden Kommunikationsstack des gesicherten Moduls;
- Erzeugen, durch die spezifische Datenübertragungskomponente (ITP) des hybriden Kommunikationsstack des offenen Moduls, eines Empfangspuffers für die zu übertragenden Daten;
- Formatieren, durch die spezifische Datenübertragungskomponente (ITP) des hybriden Kommunikationsstack des offenen Moduls, einer Aufforderung zur Pufferöffnung an die spezifische Datenübertragungskomponente (ITP) des hybriden Kommunikationsstack des gesicherten Moduls, wobei die Aufforderung zur Öffnung wenigstens eine Kennung des Empfangspuffers für die zu übertragenden Daten und einen Zugangspfad (pathname), der für die Übertragung der Daten benötigt wird, enthält;
- Übertragen der Aufforderung zur Pufferöffnung;
- Empfangen, von der spezifischen Datenübertragungskomponente (ITP) des hybriden Kommunikationsstack des gesicherten Moduls, einer Bestätigung des Empfangs der Aufforderung; und, wenn die Empfangsbestätigung die Datenübertragung freigibt,
- Übertragen der Daten zu der spezifischen Datenübertragungskomponente (ITP) des hybriden Kommunikationsstack des gesicherten Moduls; und
- Schließen der Verbindung zu der Sitzungsverwaltungskomponente (LibService) des hybriden Kommunikationsstack des gesicherten Moduls.

5. Übertragungsverfahren nach Anspruch 4, **dadurch gekennzeichnet, dass** die Aufforderung zur Pufferöffnung eine Pufferkennung (FD) und eine Zertifikatskennung (CertID) enthält.

6. Übertragungsverfahren nach Anspruch 5, **dadurch gekennzeichnet, dass** es, im Bereich des gesicherten Moduls, einen Schritt des Überprüfens der Zertifikatskennung und, wenn das Überprüfen der Zertifikatskennung ein negatives Ergebnis liefert, einen Schritt des Schließens der Verbindung umfasst.

7. Übertragungsverfahren nach Anspruch 5, **dadurch gekennzeichnet, dass** es, im Bereich des gesicherten Moduls, einen Schritt des Überprüfens der Zertifikatskennung und, wenn das Überprüfen der Zertifikatskennung ein positives Ergebnis liefert, einen Schritt des Übertragens der Bestätigung des Empfangs der Aufforderung zur Pufferöffnung umfasst.

8. Übertragungsverfahren nach Anspruch 4, **dadurch gekennzeichnet, dass** es, nach dem Empfangen der Daten durch die spezifische Datenübertragungskomponente (ITP) des hybriden Kommunikationsstack des gesicherten Moduls, einen Schritt des Unterziehens der Daten einer Filterkomponente (firewal) und, wenn die Daten nicht für die Zielapplikation (Serv) erwarteten Daten entsprechen, einen Schritt des Zurückweisens der übertragenen Daten umfasst.

9. Elektronische Vorrichtung, die in ihrem Inneren ein erstes elektronisches Modul. das einen Universalprozessor umfasst, so genanntes offenes Modul, und ein zweites elektronisches Modul, das einen gesicherten Prozessor umfasst, so genanntes gesichertes Modul, verbindet, wobei das erste Modul ein erstes Betriebssystem ausführt und wobei das zweite Modul ein zweites Betriebssystem ausführt, das offene Modul einen hybriden Kommunikationsstack umfasst, der neben Standardkomponenten der Schichten 3 und 4 des OSI-Modells, eine spezifische Datenübertragungskomponente (ITP) umfasst, die sowohl die Netzschicht als auch die Transportschichtfunktionalität verwaltet und die Schichten 3 und 4 des OSI-Modells verbindet, und das gesicherte Modul auch einen hybriden Kommunikationsstack umfasst, der neben Standardkomponenten der Schichten 3 und 4 des OSI-Modells, eine spezifische Datenübertragungskomponente (ITP) umfasst, die sowohl die Netzschicht als auch die Transportschichtfunktionalität verwaltet und die Schichten 3 und 4 des OSI-Modells verbindet, wobei die Vorrichtung ferner umfasst:
- Mittel zum Empfangen, durch eine Sitzungsverwaltungskomponente (LibService) des hybriden Kommunikationsstack des offenen Moduls, von einer auf dem offenen Modul ausgeführten Applikation (APP), einer Aufforderung zur Übertragung von Daten an eine Zielapplikation (Serv), die auf dem gesicherten Modul ausgeführt wird;
- Mittel zum Bestimmen, durch die Sitzungsverwaltungskomponente (LibService) des hybriden Kommunikationsstack des offenen Moduls, eines von der Applikation benötigten Weges zur Übertragung der Daten, in Abhängigkeit von dem Inhalt der Aufforderung, entweder über die spezifische Datenübertragungskomponente (ITP) des hybriden Kommunikationsstack des offenen Moduls, ohne die Standardkomponenten, Schichten 3 und 4 des OSI-Modell, des hybriden Kommunikationsstack des offenen Moduls zu durchlaufen, oder über die Standardkomponenten, Schichten 3 und 4 des OSI-Modell, des hybriden Kommunikationsstack des offenen Moduls, ohne die spezifische Datenübertragungskomponente (ITP) des hybriden Kommunikationsstack des offenen Moduls zu durchlaufen; und
- Mittel zum Verwenden der spezifischen Datenübertragungskomponente (ITP) des offenen Moduls, um die Daten an die entsprechende spezifische Datenübertragungskomponente (ITP) des gesicherten Moduls zu übertragen, die ausgeführt werden, wenn die Applikation (APP) die Daten über die spezifische Datenübertragungskomponente (ITP) übertragen möchte.

10. Computerprogrammprodukt, umfassend Programmcode-Anweisungen für die Durchführung eines Kommunikationsverfahrens nach Anspruch 1, wenn es von einem Prozessor ausgeführt wird.

## Claims

1. Method for transmitting data between a first electronic module comprising a general-purpose processor, called the open module, and a second electronic module comprising a secure processor, called the secure module, the two modules being combined in an electronic device, the first module executing a first operating system and the second module executing a second operating system, the open module comprises a hybrid communication stack comprising, alongside standard components of layers 3 and 4 of the OSI model, a specialised data transmission component (ITP) managing both the network layer and the transport layer functionality and connecting layers 3 and 4 of the OSI model, and the secure module also comprises a hybrid communication stack comprising, alongside standard components of layers 3 and 4 of the OSI model, a specialised data transmission component (ITP) managing both the network layer and the transport layer functionality and connecting layers 3 and 4 of the OSI model, the method comprising the following steps:
- Reception, by a session management component (LibService) of the hybrid communication stack of the open module, from an application (APP) running on the open module, of a request to transmit data to a destination application (Serv) running on the secure module;
- Determination, by the session management component (LibService) of the hybrid communication stack of the open module, of a channel to transmit said data which is required by the application (APP), depending on the content of said request, either via the specialised data transmission component (ITP) of the hybrid communication stack of the open module, without using the standard components, of layers 3 and 4 of the OSI model, of the hybrid communication stack of the open module, or via the standard components, of layers 3 and 4 of the OSI model, of the hybrid communication stack of the open module, without using the specialised data transmission component (ITP) of the hybrid communication stack of the open module; and
- When the application (APP) wants to transmit said data via the specialised data transmission component (ITP) of the hybrid communication stack of the open module, a step of implementing said specialised data transmission component (ITP) of the open module to transmit the data to the corresponding specialised data transmission component (ITP) of the secure module.

2. Method for transmitting data according to claim 1, **characterised in that** the step of implementing said specialised data transmission component (ITP) of the open module comprises, before this implementation, at least one step of checking the authorisation to transmit data from the original application (APP) to the destination application (Serv).

3. Method for transmitting data according to claim 1, **characterised in that** the step of implementing said specialised data transmission component (ITP) of the open module comprises at least one data serialisation step, according to a predetermined serialisation format.

4. Method for transmitting data according to one of claims 1 to 3, **characterised in that** the step of implementing said specialised data transmission component (ITP) of the open module comprises the following steps:
- Opening of a connection intended for a session management component (LibService) of the hybrid stack of the secure module;
- creation, by the specialised data transmission component (ITP) of the hybrid stack of the open module, of a buffer for receiving the data to be transmitted;
- formatting, by the specialised data transmission component (ITP) of the hybrid stack of the open module, of a buffer opening request intended for a specialised data transmission component (ITP) of the hybrid stack of the secure module, said opening request comprising at least one identifier of the buffer for receiving the data to be transmitted and a pathname required for the transmission of said data;
- transmission of said buffer opening request;
- reception, from the specialised data transmission component (ITP) of the hybrid stack of the secure module, of an acknowledgement of receipt of said request; and
when the acknowledgement of receipt authorises the data transmission:
- transmission of said data to said specialised data transmission component (ITP) of the hybrid stack of the secure module; and
- closure of the connection to the session management component (LibService) of the hybrid stack of the secure module.

5. Transmission method according to claim 4, **characterised in that** the buffer opening request comprises a buffer identifier (FD) and a certificate identifier (CertID).

6. Transmission method according to claim 5, **characterised in that** it comprises, in the secure module, a step of checking said certificate identifier, and when the check of said certificate identifier delivers a negative result, a step of closing the connection.

7. Transmission method according to claim 5, **characterised in that** it comprises, in the secure module, a step of checking said certificate identifier, and when the check of said certificate identifier delivers a positive result, a step of transmitting the acknowledgement of receipt of said buffer opening request.

8. Transmission method according to claim 4, **characterised in that** after the reception of said data by said specialised data transmission component (ITP) of the hybrid stack of the secure module, it comprises a step of submitting the data to a filtering component (firewall); and when said data does not correspond to data expected for the destination application (Serv), a step of rejecting said transmitted data.

9. Electronic device combining a first electronic module comprising a general-purpose processor, called the open module, and a second electronic module comprising a secure processor, called the secure module, the first module executing a first operating system and the second module executing a second operating system, the open module comprises a hybrid communication stack comprising, alongside standard components of layers 3 and 4 of the OSI model, a specialised data transmission component (ITP) managing both the network layer and the transport layer functionality and connecting layers 3 and 4 of the OSI model, and the secure module also comprises a hybrid communication stack comprising, alongside standard components of layers 3 and 4 of the OSI model, a specialised data transmission component (ITP) managing both the network layer and the transport layer functionality and connecting layers 3 and 4 of the OSI model, the device further comprising:
- means for receiving, by a session management component (LibService) of the hybrid communication stack of the open module, from an application (APP) running on the open module, a request to transmit data to a destination application (Serv) running on the secure module;
- means for determining, by the session management component (LibService) of the hybrid communication stack of the open module, a channel to transmit said data which is required by the application, depending on the content of said request, either via the specialised data transmission component (ITP) of the hybrid communication stack of the open module, without using the standard components, of layers 3 and 4 of the OSI model, of the hybrid communication stack of the open module, or via the standard components, of layers 3 and 4 of the OSI model, of the hybrid communication stack of the open module, without using the specialised data transmission component (ITP) of the hybrid communication stack of the open module; and
- means for implementing said specialised data transmission component (ITP) of the open module to transmit the data to the corresponding specialised data transmission component (ITP) of the secure module executed when the application (APP) wants to transmit said data via the specialised data transmission component (ITP).

10. Computer program product comprising program code instructions for the implementation of a communication method according to claim 1, when it is executed by a processor.
